# EUROPEAN PATENT APPLICATION

(11) **EP 3 015 949 A1**
(43) Date of publication of application: **04.05.2016**
(21) Application number: 15191117.9
(22) Date of filing: 22.10.2015
(51) Int. Cl.: G06F 1/16, G06F 3/14, G06F 19/00, H04N 21/41, H04N 21/436, H04N 21/472, H04N 5/44, H04N 21/422, H04N 21/414, H04N 5/445

(54) **METHOD AND DEVICE FOR DISPLAYING INFORMATION**

(30) Priority: 29.10.2014 CN 201410592403
(71) Applicant: Xiaomi Inc., Beijing 100085 (CN)
(72) Inventor: FU, Qiang, 100085 BEIJING (CN); WANG, Yang, 100085 BEIJING (CN); REN, Qiao, 100085 BEIJING (CN); ZHAO, Ming, 100085 BEIJING (CN)
(74) Representative: Delumeau, François Guy

(57) **Abstract**

The present disclosure relates to a method and a device for displaying information. The method includes: receiving (S11) a request for displaying apparatus control interface; acquiring (S12) apparatus information of an apparatus; generating (S13) a store interface according to the apparatus information; and displaying the store interface. The technical solutions provided by the embodiments of the present disclosure may include the following advantageous effects: enabling a user to acquire product information to be purchased conveniently, accurately and quickly, improving the user experience, and saving the time and network resources.

## Description

### TECHNICAL FIELD

The present disclosure relates to the field of technology for displaying apparatus information, and more particularly, to a method and a device for displaying information.

### BACKGROUND

In the related art, with the development of smart home technologies and wireless network technologies, more and more household appliances possess a remote control function, such as a purifier, a water purifier and the like. These household appliances usually have accessories needing to be replaced, such as a filter element and a filter screen. When the accessories need to be replaced, a user usually needs to purchase corresponding accessories at a special store, which is very inconvenient.

### SUMMARY

The present disclosure provides a method and a device for displaying information.

According to a first aspect, the invention relates to a method for displaying information, comprising:
receiving a request for displaying an apparatus control interface;
acquiring apparatus information;
generating a store interface according to the apparatus information; and
displaying the store interface.

In a particular embodiment, the step of receiving the request for displaying the apparatus control interface is:
receiving an apparatus control command inputted by a user; or
receiving a command inputted by a user for enabling an apparatus control application.

In a particular embodiment, the step of acquiring the apparatus information is:
acquiring information of an apparatus currently operated by a user; or
acquiring information of all apparatuses that are operable by a user.

In a particular embodiment, the step of generating the store interface according to the apparatus information is:
acquiring product information corresponding to the apparatus according to the apparatus information; and
generate the store interface according to the product information.

According to a second aspect, the invention relates to a device for displaying information, comprising:
a control request receiving unit configured to receive a request for displaying an apparatus control interface;
an apparatus information acquisition unit configured to acquire apparatus information;
a store interface generation unit configured to generate a store interface according to the apparatus information ;and
a store interface display unit configured to display the store interface.

In a particular embodiment, the control request receiving unit is configured to receive an apparatus control command inputted by a user; or receive a command inputted by a user for enabling an apparatus control application.

In a particular embodiment, the apparatus information acquisition unit is configured to acquire information of an apparatus currently operated by a user; or acquire information of all apparatuses that are operable by a user.

In a particular embodiment, the store interface generation unit is configured to acquire product information corresponding to the apparatus according to the apparatus information; and generate the store interface according to the product information.

According to a third aspect, the invention relates to a device for displaying information, comprising:
a processor; and
a memory for storing instructions executable by the processor;
wherein the processor is configured to:
   receive a request for displaying an apparatus control interface;
   acquire apparatus information;
   generate a store interface according to the apparatus information; and
   display the store interface.

In one particular embodiment, the steps of the method for displaying information are determined by computer program instructions.

Consequently, according to a fourth aspect, the invention is also directed to a computer program for executing the steps of a method for displaying information when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided by the embodiments of the present disclosure may include the following advantageous effects. Users may be enabled to acquire information on products to be purchased conveniently, accurately and quickly, thus user experience may be improved, and time cost and network resources may be saved.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart of a method for displaying information, according to an exemplary embodiment.
Fig. 2 is a flow chart of a method for displaying information, according to an exemplary embodiment.
Fig. 3 is a schematic diagram illustrating a terminal interface provided by embodiments of the present disclosure.
Fig. 4 is a schematic diagram illustrating a terminal interface provided by embodiments of the present disclosure.
Fig. 5 is a block diagram of a device for displaying information, according to an exemplary embodiment.
Fig. 6 is a block diagram of a device for displaying information, according to an exemplary embodiment.
Fig. 7 is a block diagram of a device, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with some aspects related to the invention as recited in the appended claims.

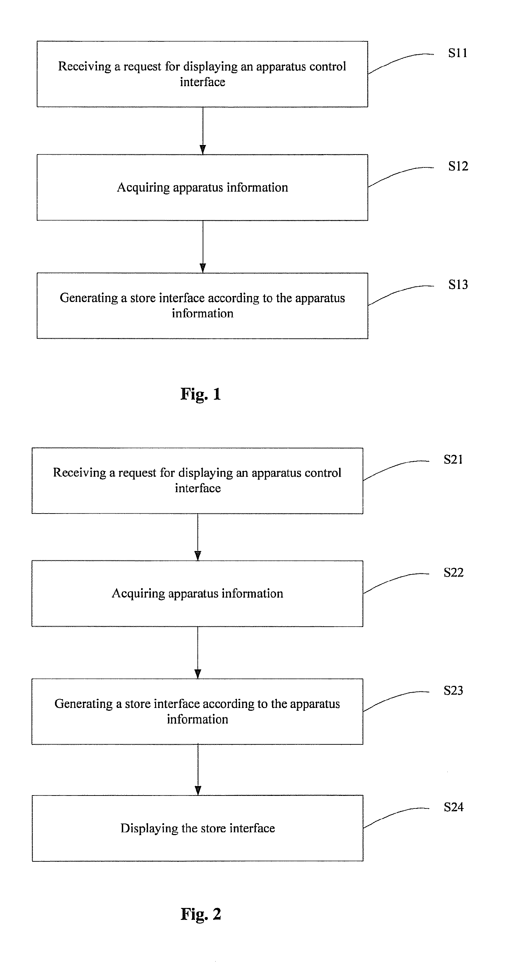

Fig. 1 is a flow chart of a method for displaying information, according to an exemplary embodiment. As shown in Fig. 1, the method for displaying information is applied in a terminal, including the following steps.

In step S11, a request for displaying an apparatus control interface is received.

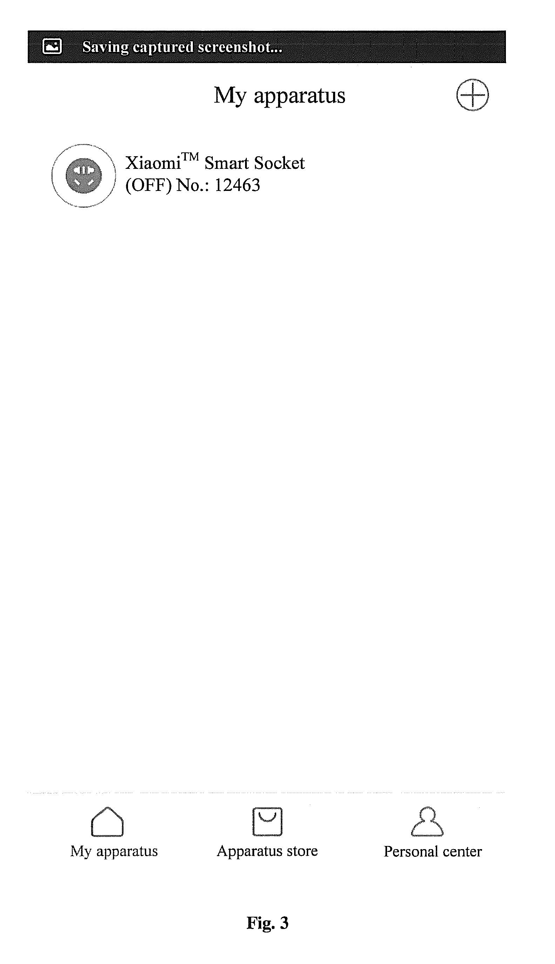

In embodiments of the present disclosure, a user may control smart household appliances at home via such mobile terminals as a mobile phone or a tablet and the like, the smart household appliances including but not limited to a purifier, a water purifier, a TV, an air conditioner, a water dispenser, a sweeping robot, a socket, an entrance guard, a door bell, a camera, a router and the like. The user may install single control software for smart household appliances or install control software individually for each smart household appliance on the mobile terminal. When the user enables the software, the mobile terminal will receive a request for displaying an apparatus interface, so as to display the control interface of the apparatus. Fig. 3 is a schematic diagram illustrating a terminal interface provided by embodiments of the present disclosure. As shown in Fig. 3, in the interface of "My apparatus", it is displayed that the currently controlled apparatus is a Xiaomi^{™} smart socket. When controlling the apparatus, the user will input an apparatus control command. At this moment, the mobile terminal will also receive the request for displaying the apparatus interface, so as to display the control interface of the apparatus.

In step S12, apparatus information is acquired.

In embodiments of the present disclosure, after receiving the request for displaying the apparatus control interface, the mobile terminal may further acquire apparatus information of apparatuses in an apparatus list or apparatus information of the apparatus currently operated by the user. The apparatus information may include at least such information as current running status, operating parameters, accessory parameters, service life of accessories and the like.

In step S13, a store interface is generated according to the apparatus information.

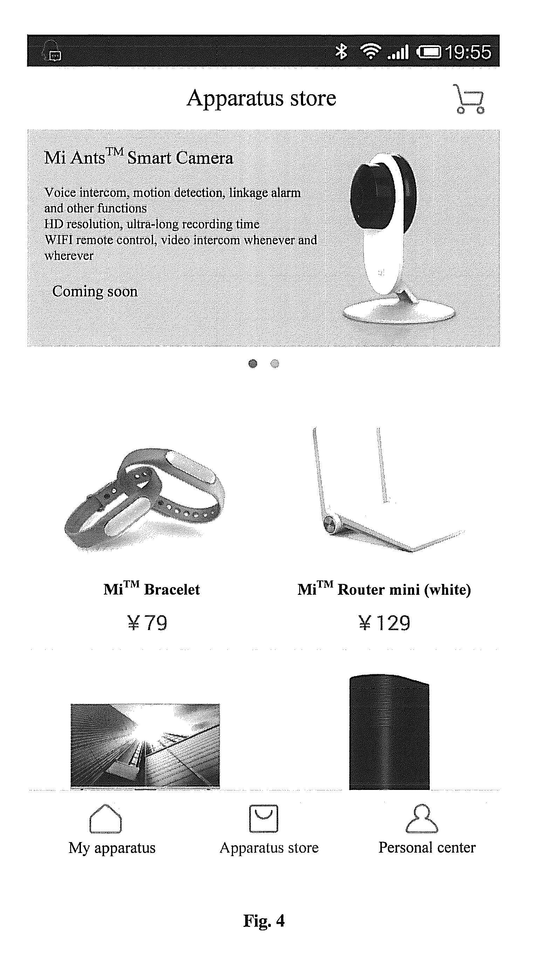

In embodiments of the present disclosure, the mobile terminal searches corresponding product information according to the apparatus information acquired, and generates a store interface according to the product information searched. Fig. 4 is a schematic diagram illustrating a terminal interface provided by embodiments of the present disclosure. As shown in Fig. 4, beside the label of "My apparatus", a label of "Apparatus store" is displayed, wherein product information related to the apparatus information will be displayed in the interface of the "Apparatus store".

For example, when the mobile terminal acquires that a filter element of a current air purifier has come to end of the service life, then product information of the filter element may be displayed in the store interface. When the mobile terminal acquires that a filter screen of a water purifier has been damaged, then product information of the filter screen may be displayed in the store interface. When the mobile terminal acquires that a new type of accessory or a matched product is issued for a certain apparatus, corresponding information of the accessory or the product may also be displayed.

Fig. 2 is a flow chart of a method for displaying information, according to an exemplary embodiment. As shown in Fig. 2, the method for displaying information is applied in a terminal, including the following steps.

In step S21, a request for displaying an apparatus control interface is received.

In step S22, apparatus information is acquired.

In step S23, a store interface is generated according to the apparatus information.

In step S24, the store interface is displayed.

In embodiments of the present disclosure, when generating the store interface, the mobile terminal may not display the store interface instantly, but display the store interface after the user clicks the label of the "Apparatus store". The mobile terminal may also directly display the store interface. For example, when a new apparatus is issued or an accessory of the current apparatus needs to be replaced urgently, the mobile terminal may also directly display the store interface.

The technical solutions provided by the embodiments of the present disclosure may include the following advantageous effects. Users may be enabled to acquire information on products to be purchased conveniently, accurately and quickly, thus user experience may be improved, and time cost and network resource may be saved.

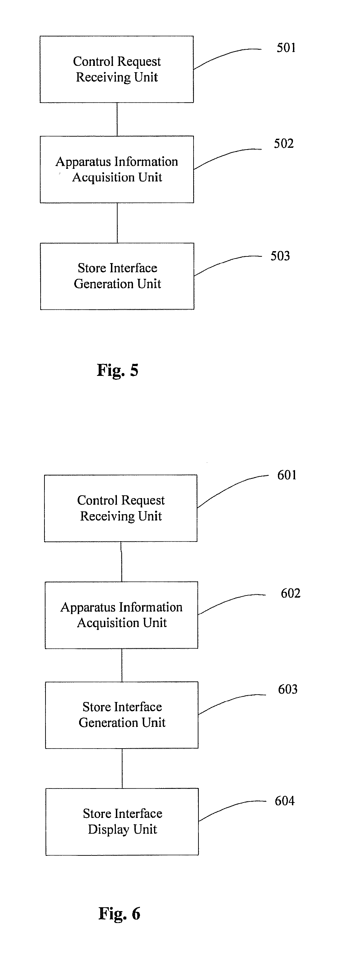

Fig. 5 is a block diagram of a device for displaying information, according to an exemplary embodiment. Referring to Fig. 5, the device includes a control request receiving unit 501, an apparatus information acquisition unit 502 and a store interface generation unit 503.

The control request receiving unit 501 is configured to receive a request for displaying an apparatus control interface.

The apparatus information acquisition unit 502 is configured to acquire apparatus information.

The store interface generation unit 503 is configured to generate a store interface according to the apparatus information.

In embodiments of the present disclosure, the control request receiving unit 501 is configured to receive an apparatus control command inputted by a user; or receive a command inputted by the user for enabling an apparatus control application.

In embodiments of the present disclosure, the apparatus information acquisition unit 502 is configured to acquire information of an apparatus currently operated by a user; or acquire information of all the apparatuses that are operable by a user.

In embodiments of the present disclosure, the store interface generation unit 503 is configured to acquire product information corresponding to the apparatus according to the apparatus information; and generate the store interface according to the product information.

With respect to the device in the above embodiments, specific implementations for performing operations for individual modules therein have been described in detail in the embodiments regarding the methods, which will not be elaborated herein.

Fig. 6 is a block diagram of a device for displaying information, according to an exemplary embodiment. Referring to Fig. 6, the device includes a control request receiving unit 601, an apparatus information acquisition unit 602, a store interface generation unit 603 and a store interface display unit 604.

The control request receiving unit 601 is configured to receive a request for displaying an apparatus control interface.

The apparatus information acquisition unit 602 is configured to acquire apparatus information.

The store interface generation unit 603 is configured to generate a store interface according to the apparatus information.

The store interface display unit 604 is configured to display the store interface.

With respect to the device in the above embodiments, specific implementations for performing operations for individual modules therein have been described in detail in the embodiments regarding the methods, which will not be elaborated herein.

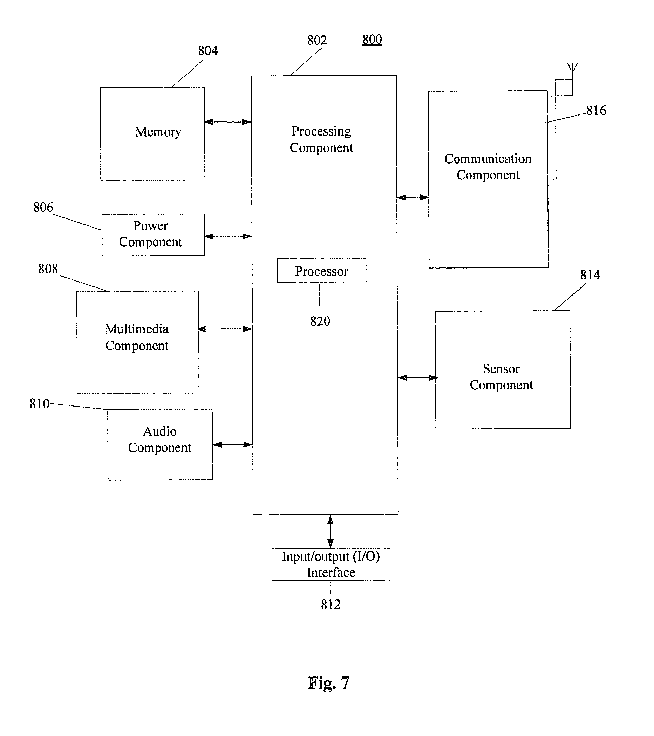

Fig. 7 is a block diagram of a device 800 for displaying information, according to an exemplary embodiment. For example, the device 800 may be a mobile phone, a computer, a digital broadcast terminal, a messaging device, a gaming console, a tablet, a medical device, exercise equipment, a personal digital assistant, and the like.

Referring to Fig. 7, the device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 may include a power management system, one or more power sources, and any other components associated with the generation, management, and distribution of power in the device 800.

The multimedia component 808 includes a screen providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and/or the rear camera may receive an external multimedia datum while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the device. For instance, the sensor component 814 may detect an open/closed status of the device 800, relative positioning of components, e.g., the display and the keypad, of the device 800, a change in position of the device 800 or a component of the device 800, a presence or absence of user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the device 800 and other devices. The device 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as included in the memory 804, executable by the processor 820 in the device 800, for performing the above-described methods. For example, the non-transitory computer-readable storage medium may be a ROM, a RAM, a CD-ROM, a magnetic tape, a floppy disc, an optical data storage device, and the like.

## Claims

1. A method for displaying information comprising:
receiving (S11, S21) a request for displaying an apparatus control interface; and
acquiring (S12, S22) apparatus information of an apparatus;
the method being characterzized in that it further comprises :
generating (S13, S23) a store interface according to the apparatus information and displaying (S24) the store interface.

2. The method for displaying information according to claim 1, **characterized in that**, the step of receiving the request for displaying the apparatus control interface comprises:
receiving an apparatus control command inputted from a user; or
receiving a command inputted from a user for launching an apparatus control application.

3. The method for displaying information according to claim 1 or 2, **characterized in that**, the step of acquiring the apparatus information comprises:
acquiring information of an apparatus currently operated by a user; or
acquiring information of all apparatuses that are operable by a user.

4. The method for displaying information according to any one of claims 1 to 3, **characterized in that**, the step of generating the store interface according to the apparatus information comprises:
acquiring product information corresponding to the apparatus according to the apparatus information; and
generating the store interface according to the product information.

5. A device for displaying information, **characterized in that**, comprising:
a control request receiving unit (501, 601), configured to receive a request for displaying an apparatus control interface;
an apparatus information acquisition unit (502, 602), configured to acquire apparatus information of an apparatus;
a store interface generation unit (503, 603), configured to generate a store interface according to the apparatus information ; and
a store interface display unit (604) configured to display the store interface.

6. The device for displaying information according to claim 5, **characterized in that**, the control request receiving unit is configured to receive an apparatus control command inputted from a user; or receive a command inputted from a user for launching an apparatus control application.

7. The device for displaying information according to claim 5 or 6, **characterized in that**, the apparatus information acquisition unit is configured to acquire information of an apparatus currently operated by a user; or acquire information of all the apparatuses that are operable by a user.

8. The device for displaying information according to any one of claims 5 to 7, **characterized in that**, the store interface generation unit is configured to acquire product information corresponding to the apparatus according to the apparatus information; and generate the store interface according to the product information.

9. A device for displaying information, **characterized in that**, comprising:
a processor; and
a memory for storing instructions executable by the processor;
wherein the processor is configured to:
receive a request for displaying an apparatus control interface;
acquire apparatus information;
generate a store interface according to the apparatus information; and
display the store interface.

10. A computer program including instructions for executing the steps of method for displaying information according to anyone of claims 1 to 4 when said program is executed by a computer.

11. A recording medium readable by a computer and having recorded thereon a computer program including instructions for executing the steps of method for displaying information according to any one of claims 1 to 4.
